Europäisches Patentamt

European Patent Office

Office européen des brevets

(19)

(11) Veröffentlichungsnummer: **0 155 741 B1**

## EUROPÄISCHE PATENTSCHRIFT

(12)

(45) Veröffentlichungstag der Patentschrift: **10.06.92**

(51) Int. Cl.[5]: **H04J 3/06**, H04Q 11/04

(21) Anmeldenummer: **85200405.0**

(22) Anmeldetag: **18.03.85**

(54) **Verfahren und Schaltungsanordnung zur Synchronisation einer digitalen Datenübertragungseinrichtung auf einen netzfremden Takt.**

(30) Priorität: **20.03.84 DE 3410188**

(43) Veröffentlichungstag der Anmeldung:
**25.09.85 Patentblatt 85/39**

(45) Bekanntmachung des Hinweises auf die
Patenterteilung:
**10.06.92 Patentblatt 92/24**

(84) Benannte Vertragsstaaten:
**AT BE CH DE FR GB IT LI SE**

(56) Entgegenhaltungen:
**EP-A- 0 085 337**

**POST OFF. ELECTR. ENG. J., Band 70, Teil 1, April 1977, Seiten 21-28; R.A. BOULTER et al.: "Network synchronization"**

(73) Patentinhaber: **Philips Patentverwaltung GmbH
Wendenstrasse 35 Postfach 10 51 49
W-2000 Hamburg 1(DE)**

(84) Benannte Vertragsstaaten:
**DE**

(73) Patentinhaber: **N.V. Philips' Gloeilampenfabrieken
Groenewoudseweg 1
NL-5621 BA Eindhoven(NL)**

(84) Benannte Vertragsstaaten:
**BE CH FR GB IT LI SE AT**

(72) Erfinder: **Bader, Edgar, Dipl.-Ing.
Parkstrasse 9
W-8501 Rückersdorf(DE)**

(74) Vertreter: **Peuckert, Hermann, Dipl.-Ing. et al
Philips Patentverwaltung GmbH Wendenstrasse 35 Postfach 10 51 49
W-2000 Hamburg 1(DE)**

EP 0 155 741 B1

## Beschreibung

Die Erfindung betrifft ein Verfahren zur Synchronisation einer digitalen Datenübertragungseinrichtung auf einen netzfremden Takt gemäss dem Oberbegriff des Patentanspruchs 1.

Für die Zusammenschaltung von Leitungen, über die eine taktgebundene Datenübertragung stattfindet ist es notwendig zur Herstellung der Synchronisation aus den auf den Leitungen übertragenen Datensignalen einen Empfangstakt abzuleiten und den Empfangstakt als Sendetakt für die Leitung der jeweils folgenden Teilstrecke zu verwenden. Auf diese Weise kann die Synchronbeziehung zwischen zwei aufeinanderfolgenden und unabhängig voneinander eingephasten Teilstrecken hergestellt werden. Handelt es sich bei den zusammengeschalteten Teilstrecken nicht um festgeschaltete Verbindungsgswege sondern um Verbindungen, die durch wahlweises Zusammenschalten verschiedener Teilstrecken teilweise erst hergestellt werden, so kann beim Durchschalten einer neuen Verbindung eine andere Phasenlage und somit im Vergleich zur vorherigen Verbindung ein sehr grosser Phasensprung auftreten.

Zur Herstellung eines Phasenausgleichs ist es aus der DT-AS 21 46 392 bekannt, die über eine Teilstrecke ankommenden Datensignale in einen Zwischenspeicher einer Anpassungsschaltung vorübergehend aufzunehmen. Zum Einspeichern der Datensignale wird ein vom Empfangstakt abgeleiteter Schreibtakt und zum Ausspeichern ein vom Sendetakt abgeleiteter Lesetakt verwendet. Dazu werden die die Einspeichergeschwindigkeit bestimmten Empfangstaktimpulse und die die Ausspeichergeschwindigkeit bestimmten Sendetakimpulse jeweils getrennt voneinander gezählt und aus dem Vergleich der beiden Zählergebnisse werden Steuerkriterien abgeleitet. Mittels der Steuerkriterien wird im Empfangstaktgeber der Empfangstakt beschleunigt oder verzögert. Bei länger andauernden Frequenzabweichungen zwischen Empfangs- und Sendetakt kann der Füllungsgrad des Zwischenspeichers einen unzulässigen hohen oder unzulässigen niedrigen Stand erreichen.

Für die synchrone Datenübertragung über Fernsprechleitungen werden sogenannte Modems verwendet, welche aus den Baugruppen Takterzeugung, Scrambler, Codierer, Descrambler, Decodierer und Phasenanpassung bestehen. Mittels eines Scramblers (Verwürfler), welcher beispielsweise ein mehrstufiges Schieberegister sein kann, wird jeder nicht zufallsverteilten Bitfolge (Nachricht), durch Überlagerung einer scheinbar zufallsverteilten Bitfolge, eine Zufallseigenschaft verlieben. Synchron oder asynchron arbeitende Datenendeinrichtung werden mittels des Modems an die Übertragungsleitung angeschlossen, welches auch zum Aufbau von Fernsprechverbindungen verwendet wird. Der Takterzeuger des Modems liefert den Sendeschritttakt und den Empfangsschrittakt mit einer Frequenzungenauigkeit von $10^{-4}$. Der Takterzeuger synchronisiert sich auf die Schrittumschläge der eintreffenden Daten. Wenn nun längere "0" oder "1"-folgen (Dauerlagen) des Datensignals zu übertragen sind, treten auf der Empfangsseite während dieser Zeit keine Schrittumschläge auf, aus denen der Schrittakt abgeleitet werden könnte. Mittels des Scramblers werden die Daten auf der Sendeseite mit einer bestimmten Codiervorschrift verwürfelt, so dass auf der Übertragungsleitung keine Dauerlagen auftreten.

Werden zwei zusammengeschaltete Modems im analogen Fernsprechnetz mit Takten betrieben, die untereinander abweichen (wobei die zulässige Frequenzabweichung $10^{-4}$ beträgt) und wird die Bitfolge über eine längere Zeit hinweg übertragen, so tritt der Fall auf, dass beide Modems über eine Reihe von Taktperioden hinweg gleichzeitig das gleiche Signal senden, bis sie aufgrund der leicht unterschiedlichen Taktfrequenzen wieder auseinanderlaufen. Da dadurch keine Unterscheidung zwischen eigenen und fremden Sendesignal mehr möglich ist, muss dies bei der Empfangstaktsynchronisierung und Phasenanpassung durch ein entsprechendes Kompensationsverfahren verhindert werden. Zur Vermeidung von solchen Echos kann am Eingang des Modems das Leitungssignal mit einem Kompensationssignal verknüpft werden, das vom Digital-Analog-Wandler aus einem 8bit-langen digitalen Kompensationswort erzeugt wird. Zu Beginn des Abgleichvorgangs wird von einem Höchstwert ausgegangen und ein Fehlervergleicher stellt fest, ob das Summensignal symmetrisch um die Nullinie liegt, bevor es zuvor in einer Abtast- und Halteschaltung dreimal je Taktperiode auf seinen augenblicklich Wert abgetastet wird. Die Symmetriebedingung ist durch die Verwendung des Scramblers auf jeder Seite sichergestellt, welcher ein zufallsverteiltes Signal erzeugt. Stimmt die Symmetrie nicht, so muss das Kompensationswort schrittweise geändert werden bis Symmetrie erreicht ist. Das Kompensationssignal ist so beschaffen, dass es sowohl das zur Zeit gesendete Bit als auch Echos auslöscht, die von den vier zuletzt gesendeten Bits herrühren. Dazu werden diese jeweils in einem Datenspeicher zwischengespeichert, dessen Inhalt mit zur Bildung des Kompensationsworts beiträgt. Für die dreimalige Abtastung jedes Bits des Empfangssignals zur Bildung des Kompensationswortes muss in einem Taktversorgungsteil der dreifache Takt erzeugt werden. Da bei einer externen Taktversorgung dieser dreifache Takt nicht zur Verfügung steht muss dieser aus dem einfachen externen Sendetakt mittels eines Phasenregelkreises erzeugt werden.

Zur Beschleunigung der Nachregelung im Empfänger kann der Synchronisiervorgang zweistufig erfolgen, wobei in der ersten Stufe durch gleichzeitiges Verstellen von Takt- und Trägerphase eine Grobsynchronisation erzielt wird und bei der nachfolgenden Feinsynchronisation die während der Datenübertragung möglicherweise auftretenden Phasenänderungen des Empfangssignals ausgeregelt werden.

In Zeitmultiplexvermittlungsstellen müssen die aus einem synchronen Datennetz ankommenden Daten mit einem durch deren Schrittgeschwindigkeit bestimmten Takt in der Zeitmultiplexvermittlungsstelle übernommen und nach dem Durchschalten der Daten in der Zeitmultiplexvermittlungsstelle mit einem entsprechend höheren Takt weitergesendet werden. Treffen an der Schnittstelle zwischen Zeitmultiplexvermittlungsstelle und den Datenleitungen Takte aus verschiedenen und zur Taktquelle der Zeitmultiplexvermittlungsstelle plesiochronen Takt zusammen, so ist eine Taktanpassung durchzuführen. Aus der DE-AS 24 20 437 ist ein Verfahren zur Taktanpassung solcher plesiochroner Signale bekannt, bei dem die ankommenden Datensignale mit auf der Empfangsseite angeordneten Leitungsschaltungen zum Takt der Zeitmultiplexvermittlungsstelle eingephast werden. Auf der Ausgangsseite der Zeitmultiplexvermittlungsstelle werden mittels eines, um die Grundlaufzeit der Vermittlung versetzten und zum Takt auf der Eingangsseite frequenzgleichen Taktes die auszusendenden Daten erneut in das Taktraster der Zeitmultiplexvermittlungsstelle eingephast und weiter gesendet.

In einem digitalen Netz (ISDN) mit einem integriertem Text und Datennetz (IDN) und einem analogen Fernsprechnetz (PSTN) verlaufen die Datenverbindungen über analoge und digitale Übertragungswege. Im digitalen Netz werden die Daten beispielsweise abschnittsweise mittels Envelope $8+2$ übertragen und der Takt wird von einer in einer Datenvermittlungsstelle angeordneten Taktzentrale abgeleitet. Die Taktzentrale hat eine hohe Taktgenauigkeit mit einer relativen Abweichung von etwa $10^{-11}$. An der Schnittstelle kann eine Anpassung an vorgegebene Endgerätegeschwindigkeiten durch eine automatische Bitratenanpassung sowie ein Asynchron/Synchron-Umsetzer angeordnet sein. Der Asynchron/Synchron-Umsetzer passt die im Start-Stop-Verfahren ausgesandten Binärsignale an die synchrone Übertragung im digitalen Netz (z.B. integriertes Text- und Datennetz IDN) an.

Aus der Entgegenhaltung Post off. Electr. Eng. J., Band 70, Teil 1, April 1977, Seiten 21-28: R.A. Boulter et al.: "Network synchronisation", ist das eingangs genannte Verfahren zur Synchronisation einer digitalen Datenübertragungseinrichtung auf einen netzfremden Takt bekannt. Die digitale Endeinrichtung innerhalb des digitalen Netzes ist synchron zum zentralen Takt einer Taktzentrale des digitalen Netzes. Hierbei ist eine Schnittstelle zwischen einem digitalen Netz und einem analogen Netz vorhanden, die einen Vergleicher enthält. Der netzfremde Takt wird mit dem zentralen Takt im Vergleicher verglichen und sendet ein Kontrolsignal zu einer lokalen Einrichtung zur Nachregelung der Frequenz des von der lokalen Einrichtung ausgesandteten netzfremden Taktes. Bei diesem Verfahren wird also der netzfremde Takt nachgeregelt bzw. synchronisiert.

Der Erfindung liegt die Aufgabe zugrunde, eine digitale Datenübertragungseinrichtung, welche von einer zentralen Taktversorgung im digitalen Netz geführt ist und innerhalb des digitalen Netzes zum zentralen Takt synchron ist, auf einen netzfremden Takt zu synchronisieren.

Diese Aufgabe wird durch die Merkmale des Patentanspruchs 1 gelöst.

Bei dem erfindungsgemäßen Verfahren wird zumindest ein Vergleichsergebnis während eines Rahmentaktes der Datenübertragungseinrichtung geliefert. Der Rahmentakt und der zentrale Takt sind miteinander synchronisiert. Die Vergleichsergebnisse werden über einen Fernmeldeweg der digitalen Datenübertragungseinrichtung zugeführt. Dieses Vergleichsergebnis wird in der digitalen Datenübertragungseinrichtung ausgewertet und der zentrale Takt synchronisiert. Hierbei werden zur Herstellung der Synchronisation bereits in digitalem Netz vorhandene Einrichtungen zur Herstellung der Synchronisation mitverwendet.

Bei einem Verfahren nach Patentanspruch 2 ist für die Übertragung der Vergleichsergebnisse kein zusätzlicher Übertragungskanal erforderlich und die Vergleicherergebnisse werden im Rahmen wie Zusatzbits übertragen.

Innerhalb des analogen Übertragungssystems beträgt die zulässige Frequenzabweichung $10^{-4}$. Dadurch, daß gemäß Patentanspruch 3 der Vergleich in jeder Periode des Rahmentakts durchgeführt wird, kann die Nachführung des Empfangstakts stufenweise erfolgen, indem dem Vergleichsergebnis ein Phasenbereich zugeordnet wird. Ausgehend von der zulässigen Frequenzabweichung von $10^{-4}$ des analogen Übertragungssystems ist auch im ungünstigsten Fall nur nach 20 Rahmen eine Korrektur notwendig.

Im Bereich dieser zulässigen Frequenzabweichung von $10^{-4}$ ist es ausreichend, gemäß Patentanspruch 4, die Codierung der Vergleichsergebnisse in einem Drei-Bit-Code vorzunehmen. Von den acht Codeelementen können zur Codierung fünf und zur Übertragung von Stopfinformationen drei Codeelemente verwendet werden.

Die Schaltungsanordnung zur Realisierung des erfindungsgemässen Verfahrens ist einfach aufgebaut, wobei in der Datenstation zusätzlich lediglich ein Zähler notwendig ist.

Die Erfindung wird im folgenden anhand eines Ausführungsbeispiels näher beschrieben und erläutert. Es zeigt:

Fig. 1 die Struktur des digitalen Netzes,

Fig. 2 den beim erfindungsgemässen Verfahren verwendeten Rahmen zur Übertragung der Vergleichsergebnisse und

Fig. 3 eine Ausführungsform der Schaltungsanordnung in der Datenstation zur Durchführung des erfindungsgemässen Verfahrens.

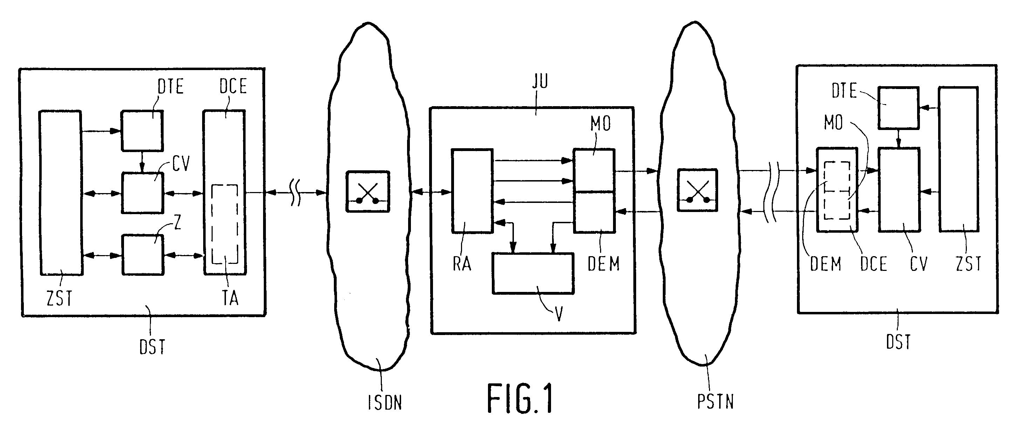

Fig. 1 zeigt ein diensteintegriertes Digitalnetz ISDN (digitales Netz) und ein Fernsprechnetz PSTN (analoges Netz). An das diensteintegrierte Digitalnetz ISDN und an das Fernsprechnetz PSTN sind Datenstationen DST angeschlossen. Die Daten einer digitalen Endeinrichtung (Datenquelle) DTE werden in der Datenstation DST einem Asynchron/Synchron-Umsetzer CV zugeführt. Der Asynchron/Synchron-Umsetzer CV ist mit einer digitalen Datenübertragungseinrichtung DCE (z.B. Anschlusschaltung TA) und diese mit dem diensteintegrierten Digitalnetz ISDN verbunden. An das Fernsprechnetz PSTN ist der Asynchron/Synchron-Umsetzer CV über eine digitale Datenübertragungseinrichtung DCE (z.B. Modulator MO bzw. Demodulator DEM) angeschlossen. In den Datenstationen DST ist jeweils eine Steuereinrichtung ZST zur Verarbeitung der übertragenen Daten, Füllbits und weiterer Zusatzbits vorgesehen. Daten und Sprachsignale werden im digitalen, synchronen Netz ISDN beispielsweise als Folge von Oktetten mit einer Bitrate von 64 K/bit/sec. übertragen.

An der Schnittstelle zwischen dem digitalen Netz ISDN und dem analogen Netz PSTN ist eine Anpassungsschaltung IU angeordnet. Die Anpassungsschaltung IU enthält eine Bitratenanpassungsschaltung RA, einen Vergleicher V sowie einen Modulator MO und einen Demodulator DEM. Mittels des Vergleichers V wird während einer Taktperiode des zentralen Takts der netzfremde Takt, d.h. der Sendetakt des Demodulators DEM der Datenstation DST angeordnet im analogen Netz PSTN, mit dem zentralen Takt der Taktzentrale des digitalen Netzes ISDN verglichen. Die Vergleichsergebnisse werden über die Bitratenanpassung RA, dem digitalen Netz ISDN und der Anschlusschaltung TA zu einem in der Datenstation DST angeordneten Zähler Z übertragen.

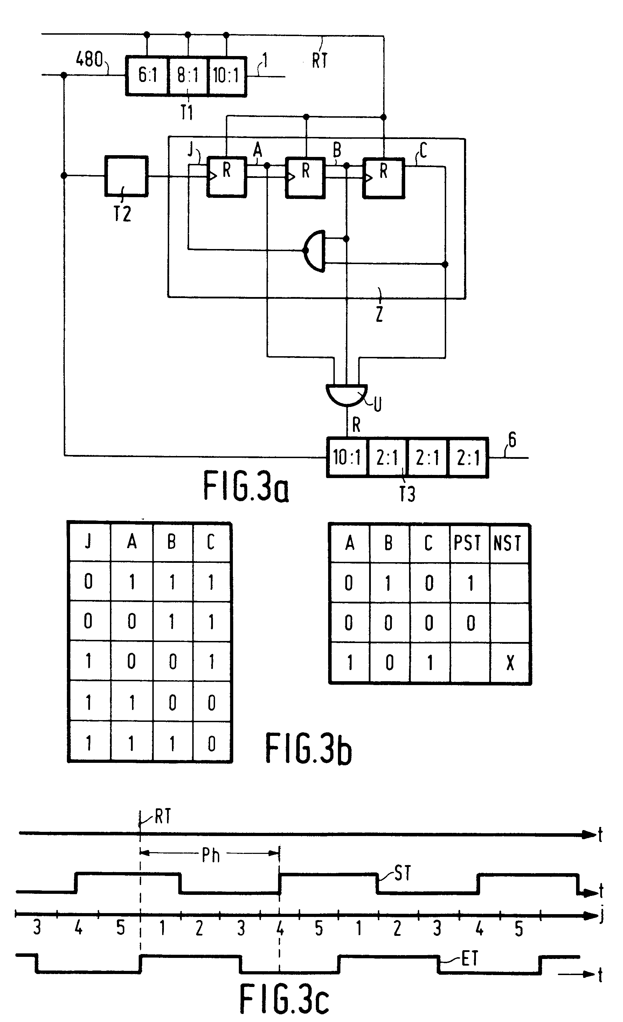

Die Vergleichsergebnisse werden in jeder Periode des Rahmentakts RT (Fig. 3a) ermittelt und zusammen mit Nutz- und Steuerinformation in jedem der aufeinanderfolgenden Rahmen übertragen. Den Vergleichsergebnissen, d.h. der daraus sich ergebenden Phasendifferenz PH wird im Vergleicher V ein Phasenbereich zugeordnet, wobei die Phasenbereiche binär kodiert sind.

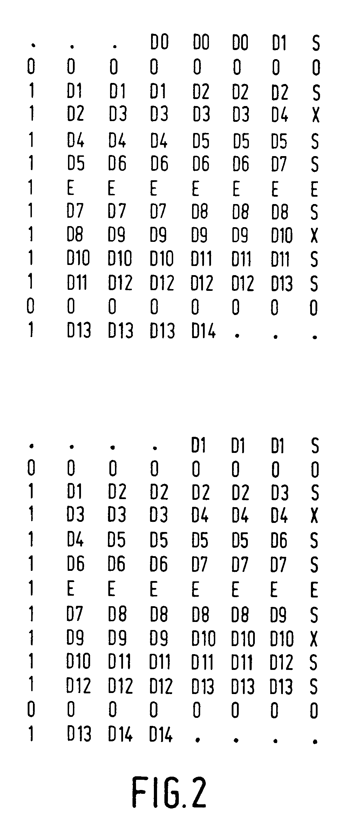

In Fig. 2 ist der beim erfindungsgemässen Verfahren vorzugsweise verwendete Rahmen dargestellt. Wie Fig. 2 zeigt, erfolgt die Übertragung mit Gruppierungen zu je acht Bits als serielles Signal und zwar angefangen beim obersten Oktett (Gruppierung zu je acht Bit) angefangen in der Reihenfolge von links nach rechts. Die Oktette sind mit Bits der Nutzinformation, z.B. Daten, mit Füllbits und mit weiteren Zusatzbits aufgefüllt. Die Zusatzbits sind im 80 Bitrahmen mit S, E und X bezeichnet. Von den Zusatzbits E werden die ersten drei Bits dazu verwendet um die Übertragungsgeschwindigkeit zu kennzeichnen und die nachfolgenden drei Zusatzbits E werden zur Übertragung der Vergleichsergebnisse verwendet. Als Rahmenkennungswort wird eine Folge, d.h. eine Zeile, von Bits mit dem Binärwert "0" verwendet.

In Fig. 3a ist der beim erfindungsgemässen Verfahren verwendete Zähler Z dargestellt. Wie bereits ausgeführt wird zur Kodierung der Vergleichsergebnisse ein Drei-Bit-Code verwendet. Fig. 3b zeigt die Kodierung von fünf aneinander anschliessenden Phasenbereichen durch fünf Codeelemente. Zur Übertragung von Stopfinformation werden drei Codeelemente verwendet, wobei für positives Stopfen PST ein Bit mit dem Binärwert "0" bzw. "1" verwendet wird. In der rechten Tabelle der Fig. 3b ist negatives Stopfen, d.h. weglassen eines Bits, mit X gekennzeichnet.

Der in der Datenstation DST angeordnete Zähler Z zählt während jeder Taktperiode des zentralen Takts zyklisch bis fünf.

Wie Fig. 3a bzw. Fig. 3c zeigen, wird der Zähler Z mit jedem Rahmentäkt RT rückgesetzt. In der Datenstation DST wird der Zählerstand des Zählers Z mit dem Vergleichsergebnis verglichen, zur Übereinstimmung gebracht, und bei Übereinstimmung ist die Datenstation DST, angeschlossen an das digitale Netz ISDN, auf den Demodulator DEM der Datenstation DST, angeschlossen an das analoge Netz PSTN, synchronisiert.

In Fig. 3c ist die Phasenabweichung zwischen Sendetakt ST und Empfangstakt ET mit Ph bezeichnet.

## Patentansprüche

1. Verfahren zur Synchronisation einer digitalen Datenübertragungseinrichtung (DCE) auf einen netzfremden Takt (ST), bei dem die digitale Endeinrichtung (DTE) innerhalb des digitalen Netzes (ISDN) synchron zum zentralen Takt (ET) einer Taktzentrale des digitalen Netzes (ISDN) ist und bei dem ein Vergleich des netzfremden Taktes (ST) mit dem zentralen Takt (ET) in einem an der Schnittstelle zwischen digitalem Netz (ISDN) und analogem Netz (PSTM) angeordnetem Vergleicher (V) durchgeführt wird,
dadurch gekennzeichnet,
daß wenigstens während einer Taktperiode des Rahmentaktes (RT) ein Vergleich vorgenommen wird, daß die Vergleichsergebnisse zur digitalen Datenübertragungseinrichtung (DCE) über einen Fernmeldeweg des digitalen Netzes (ISDN) übertragen werden und daß in der digitalen Datenübertragungseinrichtung (DCE) die Vergleichsergebnisse zur Taktkorrektur des zentralen Taktes (ET) verwendet werden.

2. Verfahren nach Anspruch 1, dadurch gekennzeichnet, dass die Vergleichsergebnisse in jedem von aufeinanderfolgenden Rahmen des digitalen Netzes (ISDN) ermittelt werden, wobei der Rahmen aus einer Folge von Oktetten besteht und die Oktette aus Datenbits und/oder Füllbits und/oder Zusatzbits zusammengesetzt werden und dass in dem Rahmen die Vergleichsergebnisse zusammen mit Nutz- und Steuerungsinformation übertragen werden.

3. Verfahren nach Anspruch 2, dadurch gekennzeichnet, dass dem Vergleicher (V) der Rahmentakt (RT) des digitalen Netzes (ISDN) zugeführt wird und der Vergleicher (V) in jeder Periode des Rahmentakts (RT) die Phasendifferenz (Ph) zwischen zentralen Takt (ET) und netzfremden Takt (ST) ermittelt, dem Vergleichsergebnis einen Phasenbereich zuordnet und die Phasenbereiche binär codiert.

4. Verfahren nach Anspruch 3, dadurch gekennzeichnet, dass zur Codierung der Vergleichsergebnisse ein Drei-Bit-Code verwendet wird und dass fünf Codeelemente zur Codierung von fünf aneinander anschliessenden Phasenbereiche und drei-Codelemente zur Übertragung von Stopfinformationen verwendet werden.

5. Schaltungsanordnung zur Durchführung des Verfahren zur Synchronisation einer digitalen Datenübertragungseinrichtung (DCE) auf einen netzfremden Takt (ST) mit einer digitalen Endeinrichtung (DTE) innerhalb des digitalen Netzes (ISDN), die synchron zum zentralen Takt (ET) einer Taktzentrale des digitalen Netzes (ISDN) ist, und mit einem an der Schnittstelle zwischen digitalem Netz (ISDN) und analogem Netz (PSTN) angeordneten Vergleicher (V) zur Durchführung eines Vergleiches des netzfremden Taktes (ST) mit dem zentralen Takt (ET),
dadurch gekennzeichnet,
daß an der Schnittstelle eine Anpassungsschaltung (IU) vorgesehen ist, welche sich aus einer Bitratenanpassungsschaltung (RA), dem Vergleicher (V), einem Modulator (MO) und einem Demodulator (DEM) zusammensetzt, daß in der Datenstation (DST) ein Zähler (Z) angeordnet ist, welcher während jeder Taktperiode des zentralen Takts (ET) zyklisch bis fünf zählt und mit dem Rahmentakt (RT) zurückgesetzt wird und daß in der Datenstation (DST) der Zählerstand des Zählers (Z) mit dem Vergleichsergebnis verglichen, zur Übereinstimmung gebracht und bei Übereinstimmung die Synchronisation als hergestellt angesehen wird.

**Claims**

1. Method of synchronising a digital data transmission arrangement (DCE) with a network-external clock (ST), in which the digital terminal equipment (DTE) in the digital network (ISDN) is in synchronism with the central clock (ET) of a clock centre of the digital network (ISDN) and in which a comparison of the network-external clock (ST) with the central clock (ET) is made in a comparator (V) arranged in the interface between the digital network (ISDN) and the analog network (PSTN), characterized in that at least during a clock period of the frame clock (RT) a comparison is made, in that the comparison results are transmitted to the digital data transmission arrangement (DCE) *via* a transmission path of the digital network (ISDN) and in that the comparison results are used in the digital data transmission arrangement (DCE) for correcting the central clock (ET).

2. Method as claimed in Claim 1, characterized in that the comparison results are obtained in each consecutive frame of the digital network (ISDN), the frames consisting of a sequence of bytes and the bytes consisting of data bits and/or justification bits and/or additional bits, and in that the comparison results are transmitted in the frame together with useful and control information

3. Method as claimed in Claim 2, characterized in that the frame clock (RT) of the digital network (ISDN) is applied to the comparator (V) and in that the comparator (V) determines in each period of the frame clock (RT) the phase difference (Ph) between the central clock (ET) and the network-external clock (ST), assigns a phase range to the comparison result and encodes the phase ranges in a binary code.

4. Method as claimed in Claim 3, characterized in that for encoding the comparison results a three-bit code is used and in that five code elements are used for encoding five contiguous phase ranges and three code elements are used for transmitting justification information bits.

5. Circuit arrangement for implementing the method of synchronising a digital transmission arrangement (DCE) with a network-external clock (ST), comprising digital terminal equipment (DTE) in the digital network (ISDN), which equipment runs in synchronism with the central clock (ET) of a clock centre of the digital network (ISDN), and including arranged in the interface between the digital network (ISDN) and the analog network (PSTN) a comparator (V) for making a comparison between the network-external clock (ST) and the central clock (ET), characterized in that at the interface an adaptation circuit (IU) is arranged comprising a bit rate adaptation circuit (RA), the comparator (V), a modulator (MO) and a demodulator (DEM), in that the data station (DST) comprises a counter (Z) which cyclically counts to five during each clock period of the central clock (ET) and is reset with the frame clock (RT) and in that at the data station (DST) the count of the counter (Z) is compared with the comparison result, brought into agreement therewith and in that the synchronisation is considered established in the case of agreement.

**Revendications**

1. Procédé pour la synchronisation d'un dispositif de transmission de données numérique (DCE) sur un rythme étranger au réseau (ST), suivant lequel le terminal numérique (DTE) dans le réseau numérique (ISDN) est synchronisé sur le rythme central (ET) d'une centrale de rythme du réseau numérique (ISDN) et suivant lequel est effectuée une comparaison entre le rythme étranger au réseau (ST) et le rythme central (ET) dans un comparateur (V) disposé à l'interface entre le réseau numérique (ISDN) et le réseau analogique (PSTM),

    caractérisé en ce qu'une comparaison est effectuée au moins pendant une période d'horloge du rythme de trame (RT), que les résultats de comparaison sont transmis au dispositif de transmission de données numérique (DCE) par l'intermédiaire d'une voie de transmission du réseau numérique (ISDN) et que, dans le dispositif de transmission de données numérique (DCE), les résultats de comparaison sont utilisés pour la correction du rythme central (ET).

2. Procédé suivant la revendication 1, caractérisé en ce que les résultats de comparaison sont déterminés dans chaque trame successive du réseau numérique (ISDN), la trame étant constituée d'une séquence d'octets et les octets étant composés de bits de données et/ou de bits de remplissage et/ou de bits supplémentaires et que, dans la trame, les résultats de comparaison sont transmis en même temps que de l'information utile et de commande.

3. Procédé suivant la revendication 2, caractérisé en ce que le rythme de trame (RT) du réseau numérique (ISDN) est appliqué au comparateur (V) et le comparateur (V) détermine, dans chaque période du rythme de trame (RT), la différence de phase (PH) entre le rythme central (ET) et le rythme étranger au réseau (ST) associe un domaine de phase aux résultats de comparaison et soumet les domaines de phase à un codage binaire.

4. Procédé suivant la revendication 3, caractérisé en ce que, pour le codage des résultats de comparaison, on utilise un code à 3 bits et qu'on utilise cinq éléments de code pour le codage de cinq domaines de phases successifs et trois éléments de code pour la transmission d'information de bourrage.

5. Montage de circuit pour l'exécution du procédé de synchronisation d'un dispositif de transmission de données (DCE) sur un rythme étranger au réseau (ST), comportant un terminal numérique (DTE) dans le réseau numérique (ISDN) qui est synchronisé sur le rythme central (ET) d'une centrale de rythme du réseau numérique (ISDN) et comportant un comparateur (V) disposé à l'interface entre le réseau numérique (ISDN) et le réseau analogique (PSTN) pour l'exécution d'une comparaison entre le rythme étranger au réseau (ST) et le rythme central (ET),

    caractérisé en ce qu'à l'interface, est prévu un circuit d'adaptation (IU) qui est composé d'un circuit d'adaptation de débit binaire (RA), du comparateur (V), d'un modulateur (MO) et d'un démodulateur (DEM), que dans le poste de données (DST) est disposé un compteur (Z) qui, pendant chaque période d'horloge du rythme central (ET), compte cycliquement jusqu'à cinq et est ramené à l'état initial au rythme de trame (RT) et que, dans le poste de données (DST), l'état de comptage du compteur (Z) est comparé aux résultats de comparaison et est amené en concordance et, en cas de concordance, la synchronisation est considérée comme étant établie.

FIG.1

EP 0 155 741 B1

| | | | | | | | |
|---|---|---|---|---|---|---|---|
| . | . | . | D0 | D0 | D0 | D1 | S |
| 0 | 0 | 0 | 0 | 0 | 0 | 0 | 0 |
| 1 | D1 | D1 | D1 | D2 | D2 | D2 | S |
| 1 | D2 | D3 | D3 | D3 | D3 | D4 | X |
| 1 | D4 | D4 | D4 | D5 | D5 | D5 | S |
| 1 | D5 | D6 | D6 | D6 | D6 | D7 | S |
| 1 | E | E | E | E | E | E | E |
| 1 | D7 | D7 | D7 | D8 | D8 | D8 | S |
| 1 | D8 | D9 | D9 | D9 | D9 | D10 | X |
| 1 | D10 | D10 | D10 | D11 | D11 | D11 | S |
| 1 | D11 | D12 | D12 | D12 | D12 | D13 | S |
| 0 | 0 | 0 | 0 | 0 | 0 | 0 | 0 |
| 1 | D13 | D13 | D13 | D14 | . | . | . |

| | | | | | | | |
|---|---|---|---|---|---|---|---|
| . | . | . | . | D1 | D1 | D1 | S |
| 0 | 0 | 0 | 0 | 0 | 0 | 0 | 0 |
| 1 | D1 | D2 | D2 | D2 | D2 | D3 | S |
| 1 | D3 | D3 | D3 | D4 | D4 | D4 | X |
| 1 | D4 | D5 | D5 | D5 | D5 | D6 | S |
| 1 | D6 | D6 | D6 | D7 | D7 | D7 | S |
| 1 | E | E | E | E | E | E | E |
| 1 | D7 | D8 | D8 | D8 | D8 | D9 | S |
| 1 | D9 | D9 | D9 | D10 | D10 | D10 | X |
| 1 | D10 | D11 | D11 | D11 | D11 | D12 | S |
| 1 | D12 | D12 | D12 | D13 | D13 | D13 | S |
| 0 | 0 | 0 | 0 | 0 | 0 | 0 | 0 |
| 1 | D13 | D14 | D14 | . | . | . | . |

FIG.2

480

6:1 | 8:1 | 10:1 — 1

RT

T1

J A B C

R R R

Z

U

R

10:1 | 2:1 | 2:1 | 2:1 — 6

T2

T3

## FIG.3a

| J | A | B | C |
|---|---|---|---|
| 0 | 1 | 1 | 1 |
| 0 | 0 | 1 | 1 |
| 1 | 0 | 0 | 1 |
| 1 | 1 | 0 | 0 |
| 1 | 1 | 1 | 0 |

| A | B | C | PST | NST |
|---|---|---|-----|-----|
| 0 | 1 | 0 | 1 | |
| 0 | 0 | 0 | 0 | |
| 1 | 0 | 1 | | X |

## FIG.3b

RT

Ph

ST

t

j

3 4 5 1 2 3 4 5 1 2 3 4 5

ET

t

## FIG.3c